(19) Europäisches Patentamt
European Patent Office
Office européen des brevets

(11) Veröffentlichungsnummer: **0 116 709**
**B1**

(12) # EUROPÄISCHE PATENTSCHRIFT

(45) Veröffentlichungstag der Patentschrift: **26.11.86**

(51) Int. Cl.⁴: **C 08 F 10/00**, C 08 F 4/64

(21) Anmeldenummer: **83112570.3**

(22) Anmeldetag: **14.12.83**

(54) **Verfahren zum Herstellen von Homo- und Copolymerisaten von alpha-Monoolefinen mittels eines Ziegler-Natta-Katalysatorsystems.**

(30) Priorität: **24.12.82 DE 3247919**

(43) Veröffentlichungstag der Anmeldung: **29.08.84 Patentblatt 84/35**

(45) Bekanntmachung des Hinweises auf die Patenterteilung: **26.11.86 Patentblatt 86/48**

(84) Benannte Vertragsstaaten: **AT DE FR GB IT**

(56) Entgegenhaltungen:
**EP-A-0 015 099**
**DE-A-2 818 642**
**GB-A-809 717**
**GB-A-851 113**
**US-A-4 224 184**
**US-A-4 330 648**

(73) Patentinhaber: **BASF Aktiengesellschaft, Carl-Bosch- Strasse 38, D-6700 Ludwigshafen (DE)**

(72) Erfinder: **Staiger, Gerhard, Dr., Virchowstrasse 26, D-6712 Bobenheim- Roxheim (DE)**
Erfinder: **Schweier, Guenther, Dr., Friedrich-Pietzsch- Strasse 14, D-6701 Friedelsheim (DE)**

EP 0 116 709 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die Erfindung liegt im Rahmen eines Verfahrens zum Herstellen von Homo- und Copolymerisaten von $C_2$- bis $C_6$- α-Monoolefinen durch Polymerisation des bzw. der Monomeren bei Temperaturen von 20 bis 160, insbesondere 50 bis 120°C und Drücken von 1 bis 100, insbesondere 20 bis 70 bar mittels eines Ziegler-Natta-Katalysatorsystems aus

(1) einer festen, feinteiligen Titan enthaltenden Komponente mit einer Bruttozusammensetzung aus

(1.1) a Molteilen Titan,

(1.2) b Molteilen Magnesium,

(1.3) c Molteilen Chlor,

(1.4) d Molteilen eines Esters der Formel

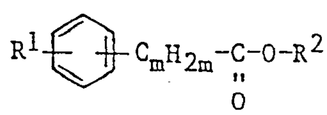

worin stehen

$R^1$ für Wasserstoff, eine $C_1$- bis $C_4$-Alkylgruppe oder eine $C_1$-bis $C_4$-Alkoxigruppe,

$R^2$ für einen einwertigen $C_1$- bis $C_6$-Kohlenwasserstoffrest gesättigt-aliphatischer Natur, vorzugsweise eine $C_1$- bis $C_4$-Alkylgruppe und

m für eine ganze Zahl von 0 bis 2, vorzugsweise die Zahl 0, sowie

(1.5) - gegebenenfalls - nicht mehr als b, vorzugsweise nicht mehr als 0,5.b Molteilen anderer Bestandteile, wobei die Beziehungen gelten

b = 4.a bis 50.a, vorzugsweise 6.a bis 25.a,

c = 3.a + b bis 2.(2.a + b), vorzugsweise 1,5.(2.a + b) bis 2.(2.a + b), und

d = 0,02.b bis 0,40.b, vorzugsweise 0,05.b bis 0,25.b,

(2) einem Aluminiumalkyl der Formel

$AlR_3^3$ oder $R_2^3Al\text{-}O\text{-}AlR_2^3$

worin steht

$R^3$ für eine $C_1$- bis $C_8$-, vorzugsweise eine $C_2$- bis $C_6$-Alkyl-gruppe, und insbesondere die i-Butylgruppe, sowie

(3) einer Esterkomponente der Formel

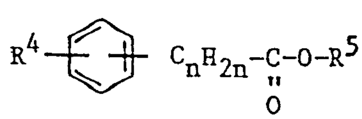

worin stehen

$R^4$ für eine $C_1$- bis $C_4$ Alkoxigruppe, eine $C_1$- bis $C_4$-Alkylgruppe oder Wasserstoff, vorzugsweise die Methoxigruppe, die Methylgruppe oder Wasserstoff und insbesondere die Methoxigruppe oder die Methylgruppe,

$R^5$ für eine $C_1$- bis $C_4$-Alkylgruppe, vorzugsweise die Methyloder Ethylgruppe, und

n für eine ganze Zahl von 0 bis 2, vorzugsweise die Zahl 0,

mit den Maßgaben, daß das Atomverhältnis Titan aus der Titan enthaltenden Komponente (1) : Aluminium aus dem Aluminiumalkyl (2) 1:1 bis 1:200, insbesondere 1:4 bis 1:100, und das Molverhältnis Aluminiumalkyl (2) : Esterkomponente (3) 1:0,5 bis 1:0,01, insbesondere 1:0,3 bis 1:0,05 beträgt.

Polymerisationsverfahren dieser Art, sowie insbesondere auch die Gattung der betroffenen Ziegler-Natta-Katalysatorsysteme bzw. deren Titan enthaltender Komponenten sind wohlbekannt - wozu im gegebenen Zusammenhang als repräsentativ z.B. verwiesen werden kann auf die US-PS 4 146 502, 4 148 756, 4 224 184, 4 294 948 und 4 329 256 sowie die GB-PS 1 559 194, 1 589 983, 2 016 020 und 2 023 155.

Die bekannten Verfahren der in Rede stehenden Art bringen - je nach ihrer besonderen Ausgestaltung - den einen oder anderen erwünschten Effekt mit sich ihnen allen haftet aber auch ein gewisser Nachteil an: Die Verfahrensprodukte entwickeln, insbesondere in geschmolzenem Zustand, einen unangenehmen Geruch, - was bei der Weiterverarbeitung der Produkte störend ist. Diese unerwünschte Eigenschaft ist besonders dann ausgeprägt, wenn das Polymerisationsverfahren als Trocken- bzw. Gasphasenverfahren durchgeführt wird, d.h.

die Polymerisation in Abwesenheit flüssiger Hilfsmedien erfolgt.

Hier setzt die Aufgabe an, die zur vorliegenden Erfindung geführt hat: Ein Verfahren der eingangs definierten Art aufzuzeigen, das mit dem vorerwähnten Nachteil nicht oder in erheblich verringertem Maße belastet ist, insbesondere auch für den Fall, daß das Verfahren als Trocken- bzw. Gasphasenverfahren durchgeführt wird.

Es wurde gefunden, daß die gestellte Aufgabe gelöst werden kann, wenn man ein Ziegler-Natta-Katalysatorsystem einsetzt, das eine besondere weitere Komponente, nämlich (4) eine bestimmte Oxahydroxikomponente, enthält.

Gegenstand der vorliegenden Erfindung ist dementsprechend ein Verfahren zum Herstellen von Homo- und Copolymerisaten von $C_2$- bis $C_6$-α-Mono-olefinen durch Polymerisation des bzw. der Monomeren bei Temperaturen von 20 bis 160, insbesondere 50 bis 120°C und Drücken von 1 bis 100, insbesondere 20 bis 70 bar mittels eines Ziegler-Natta-Katalysatorsystems aus

(1) einer festen, feinteiligen Titan enthaltenden Komponente mit einer Bruttozusammensetzung aus

(1.1) a Molteilen Titan,

(1.2) b Molteilen Magnesium,

(1.3) c Molteilen Chlor,

(1.4) d Molteilen eines Esters der Formel

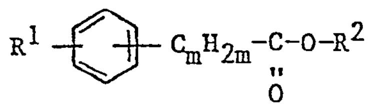

worin stehen

$R^1$ für Wasserstoff, eine $C_1$- bis $C_4$-Alkylgruppe oder eine $C_1$-bis $C_4$-Alkoxigruppe,

$R^2$ für einen einwertigen $C_1$- bis $C_6$-Kohlenwasserstoffrest gesättigt-aliphatischer Natur, vorzugsweise eine $C_1$- bis $C_4$-Alkylgruppe und

m eine ganze Zahl von 0 bis 2, vorzugsweise die Zahl O, sowie

(1.5) - gegebenenfalls - nicht mehr als b, vorzugsweise nicht mehr als 0,5.b Molteilen anderer Bestandteile, wobei die Beziehungen gelten

b = 4.a bis 50.a, vorzugsweise 6.a bis 25.a,

c = 3.a + b bis 2.(2.a + b), vorzugsweise 1,5.(2.a + b) bis 2.(2.a + b), und

d = 0,02.b bis 0,40.b, vorzugsweise 0,05.b bis 0.25.b,

(2) einem Aluminiumalkyl der Formel

$AlR_3^3$ oder $R_2^3Al\text{-}O\text{-}AlR_2^3$

worin steht

$R^3$ für eine $C_1$- bis $C_8$-, vorzugsweise eine $C_2$- bis $C_6$-Alkyl-gruppe, und insbesondere die i-Butylgruppe, sowie

(3) einer Esterkomponente der Formel

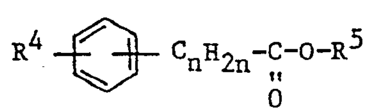

worin stehen

$R^4$ für eine $C_1$- bis $C_4$-Alkoxigruppe, eine $C_1$ bis $C_4$-Alkylgruppe oder Wasserstoff, vorzugsweise die Methoxigruppe, die Methylgruppe oder Wasserstoff und insbesondere die Methoxigruppe oder die Methylgruppe,

$R^5$ für eine $C_1$- bis $C_4$-Alkylgruppe, vorzugsweise die Methyloder Ethylgruppe, und

n für eine ganze Zahl von 0 bis 2, vorzugsweise die Zahl 0,

mit den Maßgaben, daß das Atomverhältnis Titan aus der Titan enthaltenden Komponente (1) : Aluminium aus dem Aluminiumalkyl (2) 1:1 bis 1:200, insbesondere 1:4 bis 1:100, und das Molverhältnis Aluminiumalkyl (2) : Esterkomponente (3) 1:0,5 bis 1:0,01, insbesondere 1:0,3 bis 1:0,05 beträgt.

Das erfindungagemäße Verfahren ist dadurch gekennzeichnet, daß das Katalysatorsystem als weitere Komponente enthält (4) eine Oxahydroxikomponente der Formel

$R^6[OC_pH_{2p}]_q\text{-}OH$

worin stehen

$R^6$ für die Phenylgruppe oder einen einwertigen $C_1$- bis $C_6$-Kohlen-wasserstoffrest gesättigt-aliphatischer Natur, vorzugsweise eine $C_1$- bis $C_4$-Alkylgruppe,

p für eine ganze Zahl von 2 bis 6, vorzugsweise die Zahl 2 oder 3, und inabesondere die Zahl 2, und

q für eine ganze Zahl von 1 bis 4, vorzugsweise die Zahl 1, 2 oder 3, und insbesondere die Zahl 1 oder 2, mit der Maßgabe, daß das Molverhältnis Esterkomponente (3) : Oxahydroxikomponente (4) 1:1 bis 1:9, insbesondere 1:1 bis 1:4 beträgt.

Zu dem erfindungsgemäßen Verfahren ist im einzelnen das folgende zu bemerken:

Das Polymerisationsverfahren als solches kann - unter Beachtung der kennzeichnenden Besonderheit - in praktisch allen einschlägig üblichen technologischen Ausgestaltungen durchgeführt werden, etwa als diskontinuierliches, taktweises oder kontinuierliches Verfahren, sei es z.B. als Suspensions-Polymerisationsverfahren, oder Trockenphasen-Polymerisationsverfahren. Die erwähnten technologischen Ausgestaltungen - mit anderen Worten: die technologischen Varianten der Polymerisation von α-Monoolefinen nach Ziegler-Natta - sind aus der Literatur und Praxis wohlbekannt, so daß sich nähere Ausführungen zu ihnen erübrigen.

Der Vollständigkeit halber ist zu erwähnen, daß sich beim erfindungsgemäßen Verfahren auch die Molekulargewichte der Polymerisate durch die einschlägig üblichen Maßnahmen regeln lassen, z.B. mittels Reglern, wie insbesondere Wasserstoff.

Des weiteren ist noch festzuhalten, daß beim erfindungsgemäßen Verfahren die Komponenten des Katalysatorsystems in mannigfacher Weise in den Polymerisationsraum eingebracht werden können, z.B. (i) die Titan enthaltende Komponente (1), daa Aluminiumalkyl (2), die Esterkomponente (3) aowie die Oxahydroxikomponente (4) alle örtlich gemeinsam, (ii) die gleichen Komponenten alle örtlich getrennt voneinander, (iii) die Komponente (1) einerseits und ein Gemisch aus den Komponenten (2), (3) und (4) andererseits örtlich getrennt voneinander - was insbesondere beim Trockenphasen-Polymerisationsverfahren von Vorteil sein kann -, (iiii) ein Gemisch aus den Komponenten (1), (3) und (4) einerseits und die Komponente (2) andererseits örtlich getrennt voneinander, oder (iiiii) die Komponente (1), die Komponente (2) sowie ein Gemisch aus den Komponenten (3) und (4) jeweils örtlich getrennt voneinander, - was ebenfalls vor allem beim Trockenphasen-Polymerisationsverfahren von Vorteil sein kann.

Schließlich ist darauf hinzuweisen, daß die vorteilhafte Eigenschaft des erfindungsgemäßen Verfahrens im allgemeinen besonders dann in Erscheinung tritt, wenn es als Trockenphasen-Polymerisationsverfahren durchgeführt wird (für dessen Ausgestaltungen typische Beispiele etwa mit den GB-PS 837 301, 1 006 469, 1 032 945 und 1 354 020 gegeben sind).

Was die stoffliche Seite des neuen Katalysatorsystems betrifft, ist im einzelnen das folgende zu sagen:

(1) Zur Titan enthaltenden Komponente

Sie kann eine der einschlägig üblichen sein, insbesondere eine einschlägig übliche, in den eingangs als repräsentativ aufgeführten Patentschriften beschriebene. Diese werden daher - um unnötige Wiederholungen zu vermeiden - auf dem Wege des Zitats zu einem Bestandteil der vorliegenden Beschreibung gemacht.

Exemplarisch sei dazu verwiesen auf die in der US-PS 4 224 184 beschriebenen Titan enthaltenden Komponenten (1), die erhalten worden sind, indem man zunächst

(1.A) in einer ersten Stufe

(1.A.1) 100 Gewichtsteile eines Alkoholats der allgemeinen Formel $Mg(OR)_2$ worin R steht für eine 1 bis 6, vorzugsweise 2 bis 4 Kohlenstoffatome aufweisende Alkylgruppe; mit

(1.A.2) soviel Gewichtsteilen Benzoylchlorid wie sie einem Molverhältnis Alkoholat : Benzoylchlorid von 100 : 5 bis 100 : 100, vorzugsweise 100 : 10 bis 100 : 50 entsprechen;

in einer Kugelschwingmühle unter einer Mahlbeschleunigung von 30 bis 80, vorzugsweise 45 bis 55 m . $sec^{-2}$ über eine Zeitspanne von 2 bis 100, vorzugsweise 5 bis 50 Stunden bei einer Temperatur von -50 bis 10, vorzugsweise -30 bis -10° C in Abwesenheit von Verdünnungsmitteln miteinander vermahlt; dann

(1.B) in einer zweiten Stufe

(1.B.1) 100 Gewichtsteile des aus Stufe (1.A) resultierenden Stoffes mit

(1.B.2) 300 bis 1800, vorzugsweise 500 bis 1000 Gewichtsteilen Titantetrachlorid

zusammenbringt, das Ganze unter ständiger Durchmischung 0,1 bis 5, vorzugsweise 0,5 bis 2 Stunden auf einer Temperatur im Bereich von 40 bis 180, vorzugsweise 70 bis 100°C hält und den dabei resultierenden Feststoff unter Abtrennung überschüssigen Titantetrachlorids isoliert, und schließlich

(1.C) in einer Dritten Stufe

(1.C.1) 100 Gewichtsteile des aus Stufe (1.B) resultierenden Feststoffes erneut mit

(1.C.2) 300 bis 1800, vorzugsweise 500 bis 1000 Gewichtsteilen Titantetrachlorid

zusammenbringt, das Ganze unter ständiger Durchmischung 0,1 bis 5, vorzugsweise 0,5 bis 2 Stunden auf einer Temperatur im Bereich von 40 bis 180, vorzugsweise 120 bis 140°C hält und den dabei resultierenden Feststoff unter Abtrennung überschüssigen Titantetrachlorids isoliert.

(2) Zum Aluminiumalkyl

Es kann ebenfalls eines der einschlägig üblichen, der angegebenen Formel gehorchenden sein sie sind aus Literatur und Praxis so wohlbekannt, daß auf sie nicht näher eingegangen zu werden braucht. Als herausragende Vertreter seien beispielsweise genannt Triisobutylaluminium sowie Tetraisobutylaloxan.

(3) Zur Esterkomponente

Zu ihr gilt wiederum sinngemäß das zu den Komponenten (1) und (2) Gesagte: Sie gehören als solche zum Stand der Technik und können die einschlägig üblichen, der angegebenen Formel gehorchenden sein.

Die Esterkomponente kann demnach z.B. eine solche sein, in deren Formel stehen $R^4$ für eine Methoxy-, Ethoxy-, n-Propoxy-, i-Propoxy- oder n-Butoxygruppe, eine Methyl-, Ethyl-, n-Propyl-, i-Propyl-, n-Butyl-, i-Butyl- oder tert.-Butylgruppe oder Wasserstoff sowie $R^5$ für eine Methyl-, Ethyl-, n-Propyl-, i-Propyl-, n-Butyl-, i-Butyl- oder tert.-Butylgruppe. Typische Beispiele für gut geeignete Esterkomponenten sind die Anissäureester und insbesondere der p-Anissäuremethylester sowie p-Anissäureethylester.

(4) Zur Oxahydroxikomponente

Durch den Einsatz dieser Komponente - zusätzlich zu den Komponenten (1), (2) und (3) - hebt sich das erfindungsgemäße Verfahren von den bekannten, mit den Komponenten (1), (2) sowie (3) arbeitenden Verfahren ab durch die zusätzliche Mitverwendung dieser Komponente (4) werden auch die erfindungsgemäß zu erreichenden Verbesserungen bewirkt.

Als Oxahydroxikomponente geeignete Verbindungen mit der angegebenen Formel sind aus der organischen Chemie als solche in großer Vielfalt bekannt. Wie sich gezeigt hat, sind im gegebenen Zusammenhang besonders gut geeignet z.B. der Ethylenglykol-monomethylether ($R^6$ = Methyl, p = 2, q = 1) sowie der Diethylenglykol-monomethylether ($R^6$ = Methyl, p =2, q = 2). Gut geeignet sind z.B. auch die entsprechenden, hierzu homologen Monoethyl-, Mono-i-propyl- und Mono-n-butylether. Als geeignet erwiesen haben sich z.B. auch das 1-Methoxipropanol-2 ($R^6$ = Methyl, p = 3, q = 1) sowie die Monomethyl- und Mono-n-butylether des Triethylenglykols ($R^6$ = Ethyl bzw. n-Butyl, p = 2, q = 3).

Die stoffliche Seite des Ziegler-Natta-Katalysatorsystems abschließend, ist zu vermerken, daß jede der Komponenten (1), (2), (3) und (4) selbstverständlich jeweils als ein Einzelindividium eingesetzt werden kann oder als ein Gemisch aus zwei oder mehr Einzelindividuen.

Die stoffliche Seite der Polymerisate betreffend hat sich gezeigt, daß das erfindungsgemäße Verfahren sich vornehmlich zum Herstellen von Propylen-Homopolymerisaten eignet sowie zum Herstellen von Propylen-Copolymerisaten mit Ethylen und/oder Buten-1, die bis zu (insgesamt) nicht mehr als 10 Mol des bzw. der Comonomeren pro 100 Mol Propylen einpolymerisiert enthalten.

**Beispiel**

Die Komponenten des eingesetzten Ziegler-Natta-Katalysatorsystems waren:

(1) Als Titan enthaltende Kompnente eine solche, die erhalten worden war, indem man wie folgt verfuhr:

(1.A) In der ersten Stufe wurden

(1.A.1) 100 Gewichtsteile Magnesiumethylat, $Mg(OC_2H_5)_2$, mit

(1.A.2) soviel (20,5) Gewichtsteilen Benzoylchlorid wie sie einem Molverhältnis Alkoholat : Benzoylchlorid von 100 : 16,7 entsprechen

in einer Kugelschwingmühle unter einer Mahlbeschleunigung von 51 m . $sec^{-2}$ über eine Zeitspanne von 15 Stunden bei einer Temperatur von -20°C in Abwesenheit von Verdünnungsmitteln miteinander vermahlen.

(1.B) In der zweiten Stufen wurden

(1.B.1) 100 Gewichtsteile des aus Stufe (1.A) resultierenden Stoffes mit

(1.B.2) 600 Gewichtsteilen Titantetrachlorid

zusammengebracht und das Ganze unter ständigem Rühren 1 Stunde auf einer Temperatur im Bereich von 75 bis 85°C gehalten. Danach wurde der resultierende Feststoff durch Filtration und Nachwaschen mit n-Heptan isoliert, wobei das Nachwaschen solange erfolgte, bis sich im Filtrat kein Titantetrachlorid mehr nachweisen ließ.

(1.C) In der dritten Stufe wurden

(1.C.1) 100 Gewichtsteile des aus Stufe (1.B) resultierenden Feststoffes erneut mit

(1.C.2) 650 Gewichtsteilen Titantetrachlorid

zusammengebracht und das Ganze unter ständigem Rühren 1 Stunde auf einer Temperatur im Bereich von 128 bis 132°C gehalten. Danach wurde der resultierende Feststoff durch Filtration und Nachwaschen mit n-Heptan isoliert, wobei das Nachwaschen solange erfolgte, bis sich im Filtrat kein Titantetrachlorid mehr nachweisen ließ.

Auf diese Weise wurde eine feste, feinteilige Titan enthaltende Komponente erhalten mit einer Bruttozusammensetzung aus

(1.1) a Molteilen Titan,

(1.2) b Molteilen Magnesium,

(1.3) c Molteilen Chlor und

(1.4) d Molteilen des Benzoesäureethylesters,

wobei die Beziehungen gelten

$b = 21 . a,$

$c = 2 . (2a + b)$ und

$d = 0,16 . b.$

(2) Als Aluminiumalkyl das Triisobutylaluminium.

(3) Als Esterkomponente der p-Anissäureethylester.

(4) Als Oxahydroxikomponente der Ethylenglykol-monomethylether.

Polymerisation mittels der angegebenen Komponenten

Ein Rührautoklav wurde mit 5000 ml Propylen, 1 mMol - gerechnet als Titan - der Komponente (1), 10 mMol der Komponente (2), 1 mMol der Komponente (3) sowie 3 mMol der Komponente (4) beschickt. Damit waren gegeben als Atomverhältnis Titan aus der Titan enthaltenden Komponente (1) : Aluminium aus dem Aluminiumalkyl (2) 1 : 10, als Molverhältnis Aluminiumalkyl (2) : Esterkomponente (3) 1:0,1 und als Molverhältnis Esterkomponente (3) : Oxahydroxikomponente (4) 1 : 3.

Die eigentliche Polymerisation wurde unter ständigem Rühren bei 60°C während 3 Stunden durchgeführt.

Das Polymerisat wurde hierbei mit einer Ergiebigkeit von 10.300 g Polypropylen pro g Titan erhalten; es wies 7,1 % in siedendem n-Heptan löslicher Anteile auf und entwwikelte in geschmolzenemm Zustabd bei 210°C praktisch keinen Eigengeruch.

**Vergleichsversuch**

Es wurde in Identität mit dem Beispiel gearbeitet, mit der einzigen Ausnahme, daß die Komponente (4) des Katalysatorsystems in Fortfall kam.

Hierbei wurde das Polymerisat mit einer Ergiebigkeit von 8.700 g Polypropylen pro g Titan erhalten; es wies 7,3 % in siedendem n-Heptan löslicher Anteile auf und entwickelte in geschmolzenem Zustand bei 210°C einen starken, wenig angenehmen Eigengeruch.

**Patentansprüche**

Verfahren zum Herstellen von Homo- und Copolymerisaten von $C_2$- bis $C_6$-α-Monoolefinen durch Polymerisation des bzw. der Monomeren bei Temperaturen von 20 bis 160°C und Drücken von 1 bis 100 bar mittels eines Ziegler-Natta-Katalysatorsystems aus

(1) einer festen, feinteiligen Titan enthaltenden Komponente mit einer Bruttozusammensetzung aus

(1.1) a Molteilen Titan,

(1.2) b Molteilen Magnesium,

(1.3) c Molteilen Chlor,

(1.4) d Molteilen eines Esters der Formel

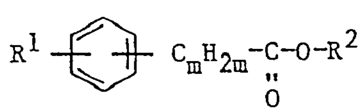

worin stehen

$R^1$ für Wasserstoff, eine $C_1$- bis $C_4$-Alkylgruppe oder eine $C_1$-bis $C_4$-Alkoxigruppe,

$R^2$ für einen einwertigen $C_1$- bis $C_6$-Kohlenwasserstoffrest gesättigt-aliphatischer Natur, und

m für eine ganze Zahl von 0 bis 2, sowie

(1.5) - gegebenenfalls - nicht mehr als b Molteilen anderer Bestandteile,

wobei die Beziehungen gelten

b = 4.a bis 50.a,

c = 3.a + b bis 2.(2.a + b) und

d = 0,02.b bis 0.40.b,

(2) einem Aluminiumalkyl der Formel

$AlR_3^3$ oder $R_2^3Al$-O-$AlR_2^3$ worin steht

$R^3$ für eine $C_1$- bis $C_8$-Alkylgruppe,

sowie

(3) einer Esterkomponente der Formel

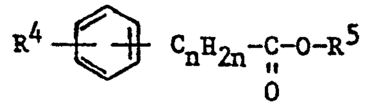

worin stehen
$R^4$ für eine $C_1$- bis $C_4$-Alkoxigruppe, eine $C_1$- bis $C_4$-Alkyl-gruppe oder Wasserstoff,
$R^5$ für eine $C_1$- bis $C_4$-Alkylgruppe, und
n für eine ganze Zahl von 0 bis 2,
mit den Maßgaben, daß das Atomverhältnis Titan aus der Titan enthaltenden Komponente (1) : Aluminium aus dem Aluminiumalkyl (2) 1:1 bis 1:200, und das Molverhältnis Aluminiumalkyl (2) : Esterkomponente (3) 1:0,5 bis 1:0,01 beträgt, dadurch gekennzeichnet, daß das Katalysatorsystem als weitere Komponente enthält
(4) eine Oxahydroxikomponente der Formel
$R^6\text{-}[OC_pH_{2p}]_q\text{-}OH$
worin stehen
$R^6$ für die Phenylgruppe oder einen einwertigen $C_1$- bis $C_6$-Kohlenwasserstoffrest gesättigt-aliphatischer Natur,
p für eine ganze Zahl von 2 bis 6, und
q für eine ganze Zahl von 1 bis 4,
mit der Maßgabe, daß das Molverhältnis Esterkomponente (3) : Oxahydroxikomponente (4) 1:1 bis 1:9 beträgt.

## Claim

A process for the preparation of homopolymers and copolymers of α-olefins of 2 to 6 carbon atoms by polymerizing the monomer(s) at a temperature of from 20 to 160°C and under a pressure of from 1 to 100 bars, using a Ziegler-Natta catalyst system consisting of
(1) a solid, finely divided component containing titanium and having the following composition:
(1.1) a molar parts of titanium,
(1.2) b molar parts of magnesium,
(1.3) c molar parts of chlorine,
(1.4) d molar parts of an ester of the formula-

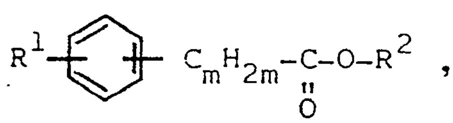

where
$R^1$ is hydrogen, $C_1$-$C_4$-alkyl or $C_1$-$C_4$-alkoxy,
$R^2$ is a monovalent, saturated, aliphatic hydrocarbon radical of 1 to 6 carbon atoms, and
m is an integer from 0 to 2, and
(1.5) if desired, not more than b molar parts of other constituents,
the following relationships applying:.
$b = 4 \times a$ to $50 \times a$,
$c = 3 \times a + b$ to $2 \times (2 \times a + b)$, and
$d = 0.02 \times b$ to $0.40 \times b$,
(2) an aluminium alkyl of the formula
$AlR_3^3$ or $R_2^3Al\text{-}O\text{-}AlR_2^3$
where
$R^3$ is $C_1$-$C_8$-alkyl,
and
(3) an ester component of the formula

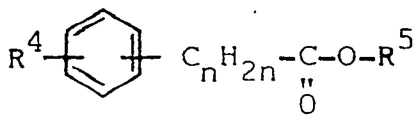

where
$R^4$ is $C_1$-$C_4$-alkoxy, $C_1$-$C_4$-alkyl or hydrogen,
$R^5$ is $C_1$-$C_4$-alkyl, and
n is an integer from 0 to 2,
with the provisos that the atomic ratio of titanium from the titanium-containing component (1) to aluminium from the aluminium alkyl (2) is from 1:1 to 1:200, and the molar ratio of aluminium alkyl (2) to ester component (3) is from 1:0.5 to 1:0.01, wherein the catalyst system contains, as further component,
(4) an oxahydroxy component of the formula
$R^6$-$[OC_pH_{2p}]_q$-OH
where
$R^6$ is phenyl or a monovalent, saturated, aliphatic hydrocarbon radical of 1 to 6 carbon atoms,
p is an integer from 2 to 6, and
q is an integer from 1 to 4,
with the proviso that the molar ratio of ester component (3) to oxahydroxy component (4) is from 1:1 to 1:9.

**Revendication**

Procédé de préparation d'homo- et copolyméres d'α-monooléfines en $C_2$ à $C_6$ par polymérisation du ou des monomères à des températures de 20 à 160°C et sous des pressions de 1 à 100 bars, à l'aide d'un système catalytique de Ziegler-Natta formé de :
(1) un composant solide, finement divisé, contenant du titane et ayant la composition brute suivante :
(1.1) a parties molaires de titane,
(1.2) b parties molaires de magnésium,
(1.3) c parties molaires de chlore,
(1.4) d parties molaires d'un ester de formule

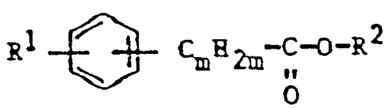

dans laquelle
$R^1$ est mis pour un atome d'hydrogène, un groupement alkyle en $C_1$ à $C_4$ ou un groupement alcoxy en $C_1$ à $C_4$,
$R^2$ est mis pour un radical hydrocarboné en $C_1$ à $C_6$ monovalent de nature aliphatique saturée et
m est mis pour un nombre entier de 0 à 2, et
(1.5) le cas échéant, pas plus de b parties molaires d'autres composants,
avec les relations suivantes :
b = 4.a à 50.a,
c = 3.a + b à 2.(2.a + b) et
d = 0,02.b à 0,40.b,
(2) un aluminium-alkyle de formule
$AlR^3_3$ ou $R^3_2Al$-O-$AlR^3_2$
dans laquelle
$R^3$ est mis pour un groupement alkyle en $C_1$ à $C_6$, et
(3) un composant ester de formule

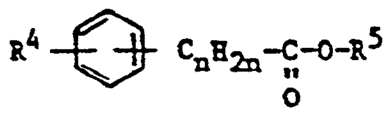

dans laquelle
$R^4$ est mis pour un groupement alcoxy en $C_1$ à $C_4$, un groupement alkyle en $C_1$ à C4 ou de l'hydrogène,
$R^5$ pour un groupement alkyle en $C_1$ à $C_4$ et
n pour un nombre entier de 0 à 2,
avec ces conditions que le rapport atomique du titane du composant contenant du titane (1) à l'aluminium de l'aluminiumalkyle (2) se situe entre 1 : 1 et 1 : 200 et que le rapport moléculaire de l'aluminium-alkyle (2) au composant ester (3) se situe entre 1 : 0,5 et 1 : 0,01, caractérisé en ce que le système catalytique contient, en tant que composant supplémentaire :
(4) un composant oxahydroxy de formule
$R^6\text{-}[OC_pH_{2p}]_q\text{-}OH$
dans laquelle
$R^6$ est mis pour le groupement phényle ou un radical hydrocarboné en $C_1$ à $C_6$ monovalent de nature aliphatique saturée,
p pour un nombre entier de 2 à 6 et
q pour un nombre entier de 1 à 4,
avec cette condition que le rapport moléculaire du composant ester (3) au composant oxahydroxy (4) se situe entre 1 : 1 et 1 : 9.